# EUROPÄISCHE PATENTSCHRIFT

(11) **EP 1 216 893 B1**
(45) Veröffentlichungstag und Bekanntmachung des Hinweises auf die Patenterteilung: **09.03.2005**
(21) Anmeldenummer: 01129261.2
(22) Anmeldetag: 12.12.2001
(51) Int. Cl.: B60R 21/20, B60Q 5/00, B62D 1/04

(54) **Fahrzeuglenkrad**
Vehicle steering wheel
Volant de véhicule

(30) Priorität: 20.12.2000 DE 20021532 U
(43) Veröffentlichungstag der Anmeldung: 26.06.2002
(73) Patentinhaber: TRW Automotive Safety Systems GmbH, 63743 Aschaffenburg (DE)
(72) Erfinder: Schütz, Dominik, 63857 Waldaschaff (DE); Derrick, John-Oliver, 97265 Hettstadt (DE)
(74) Vertreter: Kitzhofer, Thomas, Dipl.-Ing.

(56) Entgegenhaltungen:
- EP-A- 0 882 625
- EP-A- 1 010 589
- DE-A- 10 056 554
- DE-A- 19 503 816
- FR-A- 2 769 881
- US-A- 5 350 190

## Beschreibung

Die Erfindung betrifft ein Fahrzeuglenkrad nach dem Oberbegriff des Anspruchs 1 oder 3.

Gassackmodule, die zur Hupenbetätigung beweglich am Fahrzeuglenkrad angebracht sind, werden als "floating horn"-Module bezeichnet. Der Gassack muß beim Entfalten fest am Gassackmodul im Bereich des Öffnungsrandes befestigt sein, um nicht durch den durch das freigesetzte Gas erzeugten Schub aus dem Modul herausgerissen zu werden. Hierzu wird der Gassack im Bereich des Öffnungsrandes üblicherweise zwischen zwei Blechen geklemmt, wobei auf der Innenseite des Öffnungsrandes ein Flansch üblicherweise in Form eines Metallringes eingelegt ist. Dieser Flansch wird im Stand der Technik gegen einen Flansch des Gasgenerators gepreßt, so daß zwischen diesen beiden Teilen der Gassack geklemmt wird. Der Gasgenerator ist an einem Gasgeneratorträgerblech befestigt, der an einer anderen Stelle wiederum am Skelett oder an einem am Skelett befestigten Teil axial verschiebbar gelagert ist. Die einzelnen Teile müssen stabil ausgebildet sein, um die Kräfte zum Zurückhalten des Gassacks in das Skelett einzuleiten.

Aus der gattungsgemäßen EP-A-0 882 625 ist ein Fahrzeuglenkrad mit einem Gassackmodul bekannt, bei dem von unterhalb des Skeletts aus eine Schraube durch den den Gassack klemmenden Flansch gesteckt und von Seiten des Gassacks aus verschraubt wird. Eine Buchse, die die Schraube umgibt, ist mittels der Schraube axial gegen die Unterseite des Gasgeneratorträgers gepreßt.

Die Erfindung schafft ein Fahrzeuglenkrad, das leichter, stabiler und aus weniger Teilen gebildet ist als bislang bekannte. Dies wird durch ein Fahrzeuglenkrad nach Anspruch 1 oder 3 erreicht. Beim erfindungsgemäßen Fahrzeuglenkrad wird die auf dem Flansch ausgeübte Kraft vorzugsweise unmittelbar in das Skelett eingeleitet und nicht über zahlreiche andere Verbindungselemente und Teile wie den Flansch am Generator, ein Generatorträgerblech und ein Blech am Skelett. Durch die unmittelbare Krafteinleitung in das Skelett oder ein vorzugsweise unmittelbar am Skelett angebrachtes Teil sind weniger Befestigungselemente vorgesehen als im Stand der Technik, denn die Last tragenden Zwischenbleche und ihre Befestigungen können entfallen.

Gemäß Anspruch 1 sind die Lagerungsstifte als Gewindestifte ausgeführt. Auf die Gewindestifte aufgeschraubte Muttern greifen unmittelbar am Skelett oder an dem nicht verschiebbar am Skelett angebrachten Teil an. Die Muttern haben außenseitig eine seitliche Führung für das Gassackmodul.

Vorzugsweise hat das Skelett oder das am Skelett unmittelbar nicht verschiebbar angebrachte Teil eine Führungshülse, in der die Mutter gleitet.

Die Lösung nach Anspruch 3 sieht vor, daß die Lagerungsstifte mit einer Rastverbindung skelettseitig befestigt sind. Hier wird auf die Lagerungsstifte, die als Gewindestift ausgeführt sind, jeweils am gewindeseitigen Ende eine Mutter mit einer angeformten Rastnase aufgeschraubt.

Vorzugsweise ist die Befestigung der Lagerungsstifte am Skelett so ausgeführt, daß sie eine Axialbewegung des Gassackmoduls samt Lagerungsstifte zur Betätigung der Hupe zuläßt. Die Axiallagerung wird damit im Bereich des Lenkradskelettes angeordnet, wo mehr Platz zur Verfügung steht als im Bereich des Gassackmoduls.

Darüber hinaus kann an wenigstens einem Lagerungsstift einer der zu schließenden Kontakte angebracht sein, so daß der Lagerungsstift samt Kontakt eine vormontierte Einheit bildet und nur noch wenige Teile beim Einbau des Gassackmoduls in das Lenkrad montiert werden müssen.

Die Lagerungsstifte können auch die seitliche Führung des Gassackmoduls bilden, so daß weitere Führungsflächen überflüssig werden.

Wenn jeder Lagerungsstift aus mehreren Teilen zusammengesetzt ist, wie als Gewindestift mit aufgeschraubter Mutter, kann zwischen der Mutter und dem Flansch vorzugsweise ein Gasgeneratorträger geklemmt werden. Da der Gasgeneratorträger keine Last mehr bei dem Entfalten des Gassacks aufzunehmen hat, kann er als Kunststoffteil ausgeführt sein, wodurch sich das Gewicht des Fahrzeuglenkrads reduzieren wird. Eine Ausführungsform sieht in diesem Zusammenhang vor, daß der Gasgeneratorträger als topfförmiges Gehäuse des Gassackmoduls ausgeführt ist.

Weitere Merkmale und Vorteil der Erfindung ergeben sich aus der nachfolgenden Beschreibung und aus den nachfolgenden Zeichnungen, auf die Bezug genommen wird. In den Zeichnungen zeigen:
Figur 1 eine Querschnittsansicht durch eine erste Ausführungsform des erfindungsgemäßen Fahrzeuglenkrads,
Figur 2 eine Querschnittsansicht durch eine zweite Ausführungsform des erfindungsgemäßen Lenkrades und
Figur 3 eine vergrößerte Ansicht des mit X bezeichneten, umrahmten Bereichs in Figur 2.

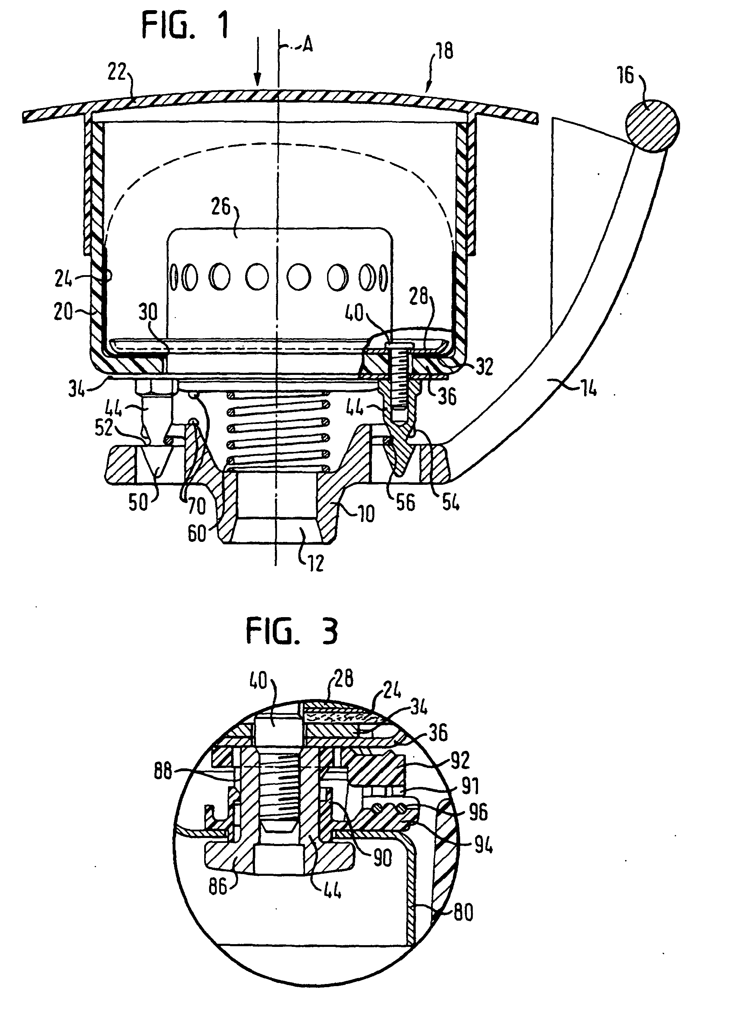

In Figur 1 ist ein Fahrzeuglenkrad dargestellt, welches ein Lenkradskelett 10 beispielsweise aus Druckguß aufweist. In Figur 1 ist nur der Skelettabschnitt im Bereich der Nabe 12 dargestellt. Auf der rechten Hälfte sind stilisiert eine Speiche 14 und der Lenkradkranz 16 angedeutet. Die Achse A ist die gedachte Mittelachse der Lenkwelle.

Ein Gassackmodul 18 ist in Achsrichtung beweglich am Skelett 10 gelagert. Das Gassackmodul hat ein topfförmiges Kunststoffgehäuse 20, auch Gasgeneratorträger genannt, welches zum Insassen hin durch eine Abdeckkappe 22 geschlossen ist. Im Gehäuse 20 sind ein gefalteter Gassack 24, dessen obere Außengeometrie durch unterbrochene Linien symbolisiert ist, ein ins Innere des Gassacks 24 ragender Gasgenerator 26 sowie ein ringförmiger Flansch 28 aus Blech angeordnet. Der Gassack hat eine Öffnung, genannt Einblasöffnung 30, durch die hindurch sich der Gasgenerator 26 teilweise ins Innere des Gassacks 24 erstreckt. Der die Einblasöffnung definierende sogenannte Öffnungsrand 32 des Gassacks liegt unmittelbar unterhalb des Flansches 28. In Richtung zur Nabe 12 liegt unterhalb des Öffnungsrandes 32 der Bodenteil 36 des Gehäuses und auf dessen Unterseite ein am Generator 26 angeformter Ringflansch 34.

Am Flansch 28 sind am Umfang verteilt lediglich drei Lagerungsstifte 40 durch Umformen der Lagerungsstifte 40 unmittelbar und bleibend befestigt. Die Lagerungsstifte sind als Gewindestifte ausgeführt und erstrecken sich durch jeweils eine zugeordnete Öffnung im Öffnungsrand 32, im Bodenteil 36 des Gehäuses 20 und im Ringflansch 34. Von unten ist auf jeden Gewindestift eine Mutter 44 aufgeschraubt, so daß zwischen dem Flansch 28 und der Mutter 44 der Öffnungsrand 32, der Bodenteil 36 und der Ringflansch 34 geklemmt werden. Auf diese Weise wird der Gassack 24 fest am Fahrzeuglenkrad arretiert. Die Muttern 44 haben am freien Ende eine Rastnase 50 in Form eines kegeligen Endes mit einer Hinterschneidung 52, in die eine unmittelbar an einem Fortsatz 54 des Skeletts 10 angebrachte Haltefeder 56 schnappen kann. Bei dieser Ausführungsform muß deshalb zur Montage des Gassackmoduls dieses von oben nur eingedrückt werden, bis die Federn 56 in die Hinterschneidungen 52 rasten.

Bei dieser Ausführungsform wird über die Lagerungsstifte 40 die Kraft beim Entfalten des Gassacks 24 unmittelbar in das Skelett 20 eingeleitet, ohne daß weitere Zwischenbleche erforderlich sind. Auch das Gehäuse 20 und der Ringflansch 34 werden geringen Belastungen beim Entfalten des Gassacks ausgesetzt.

Das Gassackmodul ist axial durch die Rastverbindung verschieblich gelagert, wobei ein nachgiebiges Rückstellelement 60 in Form einer Schraubenfeder zwischen der Unterseite des Gassackmoduls 18 und der Oberseite des Skeletts 10 geklemmt ist.

Wird das Gassackmodul nach unten gedrückt, kommen zwei Kontakte 70 (einer am Gassackmodul 18, einer am Skelett 10) miteinander in Berührung, schließen einen Stromkreis, und ein Hupensignal ertönt. Mit Betätigung des Gassackmoduls 18 kann damit der Kontakt zur Betätigung der Hupe geschlossen werden. Bei diesem Verschieben des Gassackmoduls 18 nach unten in Pfeilrichtung bewegen sich die Muttern 44 nach unten, und die Hinterschneidungen 52 wandern ebenfalls nach unten, ohne daß die Haltefedern 56 in eine entrastete Stellung kommen. Die Zurückstellung erfolgt mittels des Rückstellelements 60.

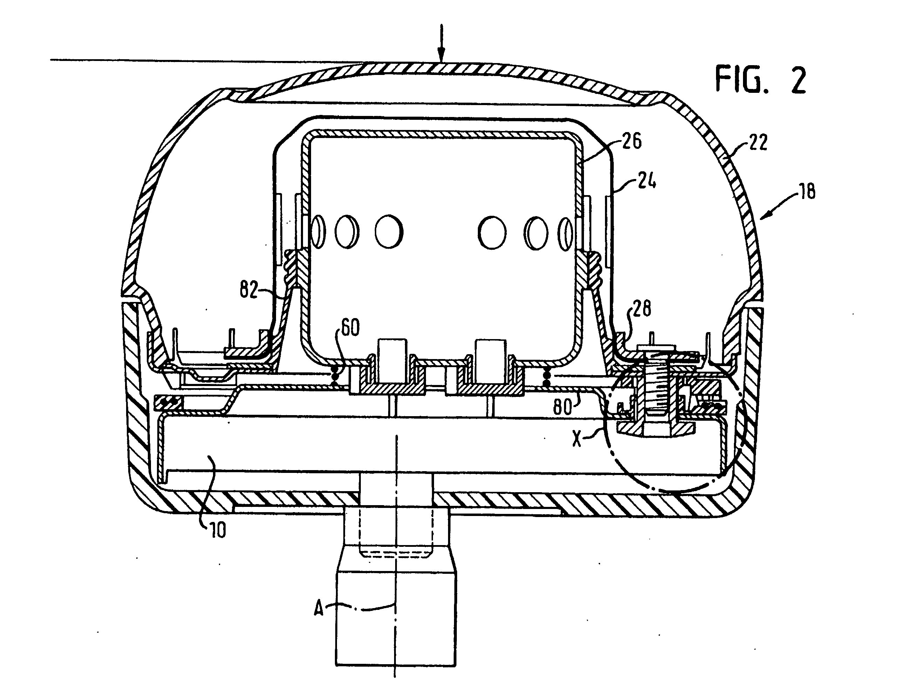

Die Ausführungsform nach Figur 2 entspricht teilweise der in Figur 1, wobei funktionsgleiche Teile die bereits eingeführten Bezugszeichen tragen.

Bei der Ausführungsform nach Figur 2 ist ein Befestigungsblech 80 unmittelbar am Skelett 10 und nicht verschiebbar zu diesem befestigt. Der Gasgenerator 26 hat bei dieser Ausführungsform keinen unmittelbar an ihm angebrachten Ringflansch 34. Vielmehr ist zwischen dem Gasgenerator 26 und dem Ringflansch 34 eine Gummimanschette 82 zur Schwingungsentkoppelung des Gasgenerators 26 vorgesehen.

Auch bei dieser Ausführungsform ist das Gassackmodul 18 axial verschieblich am Skelett 10, genauer gesagt am Teil 80 gelagert. Mehrere Lagerungsstifte 40, von denen nur einer in Figur 3 gezeigt ist, sind als Gewindestifte ausgebildet, die im Flansch 28 bleibend befestigt sind. Die Lagerungsstifte 40 erstrecken sich durch Öffnungen im Gassack 24, dem darunterliegenden Ringflansch 34 und einem Boden 36. Die von unten auf die Lagerungsstifte 40 aufgeschraubten Muttern 44 haben einen vorstehenden Kopf 86, der als axialer Anschlag dient, und einen buchsenartigen Abschnitt mit einer kreiszylindrischen Außenfläche, die als seitliche Führung 88 des Gassackmoduls 18 wirkt. Eine im Teil 80 befestigte Führungshülse 90 nimmt die Mutter 44 auf. Über die Führungsstifte 40 und die Muttern 44 wird das Gassackmodul 18 nicht nur axial, sondern auch seitlich geführt.

Bei dieser Ausführungsform ist an den Lagerungsstiften 40 ein federnder Kontakt 91 angebracht, der in einer elastischen Aufnahme 92 gehaltert ist. An die Führungshülse 90 ist ein Gegenkontakt mit einem Basisteil 94 und einer Feder 96 befestigt. Wenn die Kontakte 91, 96 durch Verschieben des Gassackmoduls 18 in Pfeilrichtung einander berühren, wird das Hupensignal ausgelöst.

Bei beiden gezeigten Ausführungsformen ist das Besondere, daß nur über die Lagerungsstifte 40 Einzelteile innerhalb des Gassackmoduls 18 (Gasgenrator mit Ringflansch 34, Gassack 24, Flansch 28 und Gasgeneratorträger 20) aneinander befestigt werden und die Gesamtheit des Gassackmoduls 18 über die Lagerungsstifte 40 zugleich skelettseitig axial verschieblich befestigt ist.

Die als Führung dienende Mutter 44 kann natürlich auch bei der Ausführungsform nach Figur 1 eingesetzt werden. Eine entsprechende Ausführungsform entspräche der in Figur 3 gezeigten, wenn das Teil 80 das Skelett bilden würde.

## Patentansprüche

1. Fahrzeuglenkrad, mit
einem Skelett (10),
einem Gassackmodul (18), das am Skelett (10) so axial beweglich angebracht ist, daß durch Andrücken des Gassackmoduls (18) ein Kontakt (70, 90, 96) zur Betätigung des Hupensignals geschlossen wird,
einem nachgiebigem Rückstellelement (60) für das Gassackmodul (18),
Lagerungsstiften (40), die unmittelbar am Flansch (28) angreifen und am Skelett (10) oder einem unmittelbar am Skelett (10) nicht verschiebbar angebrachten Teil (80) befestigt sind,
wobei das Gassackmodul (18) einen Gassack (24) mit einem eine Einblasöffnung (30) definierenden Öffnungsrand (32) sowie einen innenseitig den Öffnungsrand (32) klemmenden Flansch (28) zur Befestigung des Gassacks (24) aufweist,
**dadurch gekennzeichnet, daß**
die Lagerungsstifte (40) als Gewindestifte ausgeführt sind und daß am Skelett (10) oder an dem am Skelett (10) unmittelbar und nicht verschiebbar angebrachten Teil (80) angreifende Muttern (44), in die die Lagerungsstifte (40) eingedreht sind, außenseitig eine seitliche Führung (88) für das Gassackmodul (18) bilden.

2. Fahrzeuglenkrad nach Anspruch 1, **dadurch gekennzeichnet, daß** am Skelett (10) oder dem am Skelett unmittelbar nicht verschiebbar angebrachten Teil (80) für jede Mutter (44) eine Führungshülse (90) vorgesehen ist.

3. Fahrzeuglenkrad, mit
einem Skelett (10),
einem Gassackmodul (18), das am Skelett (10) so axial beweglich angebracht ist, daß durch Andrücken des Gassackmoduls (18) ein Kontakt (70; 90, 96) zur Betätigung des Hupensignals geschlossen wird,
einem nachgiebigem Rückstellelement (60) für das Gassackmodul (18),
Lagerungsstiften (40), die unmittelbar am Flansch (28) angreifen und am Skelett (10) oder einem unmittelbar am Skelett (10) nicht verschiebbar angebrachten Teil (80) befestigt sind,
wobei das Gassackmodul (18) einen Gassack (24) mit einem eine Einblasöffnung (30) definierenden Öffnungsrand (32) sowie einen innenseitig den Öffnungsrand (32) klemmenden Flansch (28) zur Befestigung des Gassacks (24) aufweist,
**dadurch gekennzeichnet, daß**
die Lagerungsstifte (40) mit einer Rastverbindung skelettseitig befestigt und als Gewindestifte ausgeführt sind, auf die am gewindeseitigen Ende eine Mutter (44) mit einer angeformten Rastnase (50) aufgeschraubt ist.

4. Fahrzeuglenkrad nach einem der vorhergehenden Ansprüche, **dadurch gekennzeichnet, daß** die Befestigung der Lagerungsstifte (40) am Skelett (10) so ausgeführt sind, daß sie eine Axialbewegung des Gassackmoduls (18) samt Lagerungsstifte (40) zur Betätigung des Hupensignals zuläßt.

5. Fahrzeuglenkrad nach einem der vorhergehenden Ansprüche, **dadurch gekennzeichnet, daß** an wenigstens einem Lagerungsstift (40) einer der zu schließenden Kontakte (91) angebracht ist.

6. Fahrzeuglenkrad, nach einem der vorhergehenden Ansprüche, **dadurch gekennzeichnet, daß** die LagerungsstiRe (40) auch die seitliche Führung des Gassackmoduls (18) bilden.

7. Fahrzeuglenkrad nach einem der vorhergehenden Ansprüche, **dadurch gekennzeichnet, daß** zwischen der Mutter (44) und dem Flansch (28) ein Gasgeneratorträger (20) geklemmt ist.

8. Fahrzeuglenkrad nach einem der vorhergehenden Ansprüche, **dadurch gekennzeichnet, daß** ein Gasgeneratorträger (20) aus Kunststoff vorgesehen ist.

9. Fahrzeuglenkrad nach einem der vorhergehenden Ansprüche, **dadurch gekennzeichnet, daß** ein als topfförmiges Gehäuse des Gassackmoduls (18) ausgebildeter Gasgeneratorträger (20) vorgesehen ist.

## Claims

1. A vehicle steering wheel, comprising
a skeleton (10),
a gas bag module (18) which is axially movably mounted at the skeleton (10) such that by pressing on the gas bag module (18) a contact (70; 90, 96) is closed for actuating the horn signal,
a resilient return element (60) for the gas bag module (18),
bearing pins (40) which directly engage the flange (28) and are attached to the skeleton (10) or to a part (80) that is non-displaceably mounted directly at the skeleton (10),
the gas bag module (18) having a gas bag (24) with an opening edge (32) defining an inflation opening (30) as well as a flange (28) clamping the opening edge (32) on the inside for fastening the gas bag (24),
**characterized in that**
the bearing pins (40) are designed as threaded pins, and that nuts (44) engaging the skeleton (10) or the part (80) directly and non-displaceably mounted at the skeleton (10) form a lateral guidance (88) for the gas bag module (18) on the outside, the bearing pins (40) being screwed into the nuts (44).

2. The vehicle steering wheel as claimed in claim 1, **characterized in that** the skeleton (10) or the part (80) non-displaceably mounted directly at the skeleton is provided with a guide sleeve (90) for each nut (44).

3. A vehicle steering wheel, comprising
a skeleton (10),
a gas bag module (18) which is axially movably mounted at the skeleton (10) such that by pressing on the gas bag module (18) a contact (70; 90, 96) is closed for actuating the horn signal,
a resilient return element (60) for the gas bag module (18),
bearing pins (40) which directly engage the flange (28) and are attached to the skeleton (10) or to a part (80) that is non-displaceably mounted directly at the skeleton (10),
the gas bag module (18) having a gas bag (24) with an opening edge (32) defining an inflation opening (30) as well as a flange (28) clamping the opening edge (32) on the inside for fastening the gas bag (24),
**characterized in that**
the bearing pins (40) are fastened on the skeleton side by means of a latching connection and are each designed as a threaded pin onto the threaded end of which a nut (44) with an integrally molded latching nose (50) is screwed.

4. The vehicle steering wheel as claimed in any of the preceding claims, **characterized in that** the bearing pins (40) are attached to the skeleton (10) such that the attachment permits an axial movement of the gas bag module (18) together with the bearing pins (40), for actuating the horn signal.

5. The vehicle steering wheel as claimed in any of the preceding claims, **characterized in that** one of the contacts (91) to be closed is mounted on at least one bearing pin (40).

6. The vehicle steering wheel as claimed in any of the preceding claims, **characterized in that** the bearing pins (40) also form the lateral guidance of the gas bag module (18).

7. The vehicle steering wheel as claimed in any of the preceding claims, **characterized in that** a gas generator carrier (20) is clamped between the nut (44) and the flange (28).

8. The vehicle steering wheel as claimed in any of the preceding claims, **characterized in that** a gas generator carrier (20) made of plastic is provided.

9. The vehicle steering wheel as claimed in any of the preceding claims, **characterized in that** a gas generator carrier (20) is provided that is designed as a pot-shaped housing of the gas bag module (18).

## Revendications

1. Volant de direction de véhicule, comportant
un squelette (10),
un module de coussin à gaz (18) qui est monté axialement mobile sur le squelette (10) de telle sorte qu'en pressant le module de coussin à gaz (18), un contact (70 ; 90, 96) est fermé pour actionner du signal de klaxon,
un élément de rappel (60) souple pour le module de coussin à gaz (18),
des goupilles de montage (40) qui s'engagent directement sur la bride (28) et qui sont fixées sur le squelette (10) ou sur une pièce (80) montée de manière indéplaçable directement sur le squelette (10),
le module de coussin à gaz (18) présentant un coussin à gaz (24) avec un bord d'ouverture (32) définissant un orifice de soufflage (30) ainsi qu'une bride (28) serrant le bord d'ouverture (32) sur la face intérieure pour fixer le coussin à gaz (24),
**caractérisé en ce que**
les goupilles de montage (40) sont réalisées sous forme de goupilles filetées et **en ce que** des écrous (44) s'engageant sur le squelette (10) ou sur la pièce (80) montée de manière indéplaçable directement sur le squelette (10) et dans lesquels sont vissées les goupilles de montage (40), forment sur la face extérieure un guidage (88) latéral pour le module de coussin à gaz (18).

2. Volant de direction de véhicule selon la revendication 1, **caractérisé en ce que** sur le squelette (10) ou sur la pièce (80) montée de manière indéplaçable directement sur le squelette (10), il est prévu une douille de guidage (90) pour chaque écrou (44).

3. Volant de direction de véhicule comportant
un squelette (10),
un module de coussin à gaz (18) qui est monté axialement mobile sur le squelette (10) de telle sorte qu'en pressant le module de coussin à gaz (18), un contact (70 ; 90, 96) est fermé pour actionner du signal de klaxon,
un élément de rappel (60) souple pour le module de coussin à gaz (18),
des goupilles de montage (40) qui s'engagent directement sur la bride (28) et qui sont fixées sur le squelette (10) ou sur une pièce (80) montée de manière indéplaçable directement sur le squelette (10),
le module de coussin à gaz (18) présentant un coussin à gaz (24) avec un bord d'ouverture (32) définissant un orifice de soufflage (30) ainsi qu'une bride (28) serrant le bord d'ouverture (32) sur la face intérieure pour fixer le coussin à gaz (24),
**caractérisé en ce que**
les goupilles de montage (40) sont fixées côté squelette par une liaison par enclenchement et sont réalisés sous forme de goupilles filetées sur lesquelles un écrou (44) est vissé avec un ergot d'enclenchement (50) moulé à l'extrémité côté filetage.

4. Volant de direction de véhicule selon l'une des revendications précédentes, **caractérisé en ce que** les goupilles de montage (40) sont fixées sur le squelette (10) de telle sorte que la fixation permet un mouvement axial du module de coussin à gaz (18) avec les goupilles de montage (40) pour actionner le signal de klaxon.

5. Volant de direction de véhicule selon l'une des revendications précédentes, **caractérisé en ce que** sur au moins une goupille de montage (40) est monté un des contacts (91) à fermer.

6. Volant de direction de véhicule selon l'une des revendications précédentes, **caractérisé en ce que** les goupilles de montage (40) forment aussi le guidage latéral du module de coussin à gaz (18).

7. Volant de direction de véhicule selon l'une des revendications précédentes, **caractérisé en ce qu'**un support de générateur de gaz (20) est serré entre l'écrou (44) et la bride (28).

8. Volant de direction de véhicule selon l'une des revendications précédentes, **caractérisé en ce qu'**il est prévu un support de générateur de gaz (20) en matière plastique.

9. Volant de direction de véhicule selon l'une des revendications précédentes, **caractérisé en ce qu'**il est prévu un support de générateur de gaz (20) réalisé en tant que boîtier en forme de pot du module de coussin à gaz (18).
